# EUROPÄISCHE PATENTANMELDUNG

(11) **EP 3 159 103 A1**
(43) Veröffentlichungstag der Anmeldung: **26.04.2017**
(21) Anmeldenummer: 15190803.5
(22) Anmeldetag: 21.10.2015
(51) Int. Cl.: B24B 17/10, B24B 21/16, B24B 27/00, B24B 49/16, B25J 9/16, B25J 11/00

(54) **VERFAHREN ZUM BETREIBEN DER SCHLEIFVORRICHTUNG UND SCHLEIFVORRICHTUNG**

(71) Anmelder: Franke Water Systems AG, 5726 Unterkulm (CH)
(72) Erfinder: Edelmann, Max, 79650 Schopfheim (DE); Anderegg, Roland, 4600 Olten (CH); Adam, Andreas, 5707 Seengen (CH)
(74) Vertreter: Lemcke, Brommer & Partner Patentanwälte Partnerschaft mbB

(57) **Zusammenfassung**

Die Schleifvorrichtung (10) weist ein wenigstens um eine Kontaktrolle (36) und eine Antriebsrolle (38) herumgeführtes, in sich geschlossenes Schleifband (34) aufweisendes Bandschleifgerät (12) auf, sowie ein programmgesteuertes, einen das Bandschleifgerät (12) tragenden Endeffektor (26) aufweisendes Handhabungsgerät (14), welches zum Schleifen eines Werkstücks (20) das Bandschleifgerät (12) entlang einer vorbestimmten, programmierten Bewegungsbahn (28) bewegt. Es sind ferner eine ein Halteorgan (18) zum Halten des Werkstücks (20) aufweisende Haltevorrichtung (16), ein Kraftmessorgan (62) zum Messen der Kraft (F), mit welcher das Schleifband (34) auf das Werkstück (20) einwirkt, ein Stellantrieb (58) zum relativ zueinander Bewegen der Kontaktrolle (36) und des Halteorgans (18), sowie ein Positionsmessorgan (64) zum Erfassen der Position (P) des Stellantriebs (58) vorgesehen, wobei das Kraftmessorgans (62) und des Positionsmessorgans (64) dazu bestimmt sind,nach erfolgter Programmierung der Bewegungsbahn (28), beim Schleifen eines Probe-Werkstück (20) - mit zurück drängbarem Stellantrieb (58) - kontinuierlich die Kraft (F) und die Position (P) des Stellantriebs (58) zu erfassen, wobei die entsprechenden Daten gespeichert und aus diesen Daten die Berührungs-Abschnitte (BB) der Bewegungsbahn (28), in welchen das Schleifband (34) am Probe-Werkstück (20) zum Schleifen anliegt, und die Berührungsfrei-Abschnitte (BFB) der Bewegungsbahn (28), in welchen das Schleifband (34) und das Werkstück (20) relativ zu einander berührungsfrei sind, ermittelt werden, und der Stellantrieb (58) dann beim Schleifen der Werkstücke (20) mittels der gespeicherten Daten in den Berührungs-Abschnitten (BB) kraftgeregelt und in den Berührungsfrei-Abschnitten (BFB) positionsgeregelt ist.

## Beschreibung

Die Erfindung betrifft ein Verfahren zum Betreiben einer Schleifvorrichtung gemäss Anspruch 1 und eine Schleifvorrichtung gemäss Anspruch 13.

Das Dokument DE 10 2010 047 510 A1 offenbart eine Bandschleifmaschine zum Massschleifen mit einem Arbeitskopf, welcher über eine Aufhängung geradlinig verfahrbar, schwenkbar um eine erste Schwenkachse und schwenkbar um eine zu dieser senkrecht verlaufenden zweiten Schwenkachse an einem Maschinenrahmen gehaltert ist. Am Arbeitskopf ist eine Rollenanordnung zum Antreiben eines geschlossenen Schleifbandes vorgesehen, wobei eine Kontaktrolle der Rollenanordnung zur Anlage an ein Werkstück vorgesehen und um eine Nulllage entlang der ersten Schwenkachse verschiebbar ist. Weiter ist die Kontaktrolle derart gehaltert, dass der Kontaktflächenbereich, in dem die Kontaktrolle zur Anlage an das Werkstück kommt, von der ersten und der zweiten Schwenkachse geschnitten wird, wenn die Kontaktrolle in der Nulllage ist. Dadurch soll erreicht werden, dass die Schwenkachsen derart zueinander angeordnet sind, dass eine Bewegung des Kontaktflächenbereichs um eine der Schwenkachsen nicht mit einer translatorischen Bewegung gekoppelt ist.

Weitere Bandschleifmaschinen sind beispielsweise aus den Dokumenten DE 42 26 708 A1 und DE 100 13 340 A1 bekannt.

Im Artikel "Modelling and Control of Robot aided Grinding Manufacturing Processes" von R. Anderegg und M. Edelmann - International Conference on Innovative Technologies, IN-TECH 2013, Budapest - wird die Modellierung einer Bandschleifvorrichtung mit einer Bandschleifmaschine und einem als Industrieroboter ausgebildeten Handhabungsgerät zum Bewegen des zu schleifenden Werkstücks beschrieben.

Beim Bandschleifen von Werkstücken, insbesondere von solchen, welche durch Freiformgeometrien beschreibbar sind, können bei Verwendung von programmgesteuerten Handhabungsgeräten wie Industrierobotern, welche das Werkstück führen, eine ungenaue Ausgangsgeometrie des Werkstücks, Positionsfehler der Bandschleifmaschine oder des Handhabungsgeräts sowie Ungenauigkeiten beim Einspannen des Werkstücks das Ergebnis der Bearbeitung negativ beeinflussen. Insbesondere bei Serienfertigungen unterliegen die Werkstücke Toleranzen. Oftmals ist der Bandschleifprozess die letzte spanende Bearbeitung und bestimmt damit die geometrischen Eigenschaften des fertigen Produkts.

Programmgesteuerte Handhabungsgeräte erlauben in der Regel nur geringe Toleranzen der Werkstücke ohne dass Mängel am Ergebnis des Bandschleifens auftreten.

Handhabungsgeräte, insbesondere Industrieroboter, weisen eine stellungsabhängig stark variierende Nachgiebigkeit auf und infolge der beim Bandschleifen auftretenden Prozesse ist die Sollposition des Endeffektors beziehungsweise des zu bearbeitenden Werkstücks nicht mehr absolut einhaltbar. Oft werden deshalb relativ der zu bewegenden Nutzlast überdimensionierte Handhabungsgeräte, insbesondere Industrieroboter, eingesetzt.

Ein Verfahren zum Betreiben einer Bandschleifvorrichtung, welches eine Serienfertigung von Werkstücken unter Einhaltung der Toleranzen ermöglicht, ist in der älteren europäische Anmeldung Nr. 14 002 470.4 offenbart. Mit dem Verfahren wird eine Bandschleifvorrichtung mit einer stationären Bandschleifmaschine und einem programmgesteuerten Handhabungsgerät, welches das zu schleifende Werkstück mittels eines Endeffektors hält und zum Bandschleifen entlang einer vorbestimmten, programmierten Bewegungsbahn bewegt, betrieben. Während des Schleifens eines Probe-Werkstücks werden die auf eine Kontaktrolle der Bandschleifmaschine einwirkende Kraft sowie die Position eines Stellantriebs zum aufeinander zu und voneinander weg Bewegen der Kontaktrolle und des Endeffektors kontinuierlich erfasst und in einem Kontroller gespeichert. Aufgrund dieser Daten wird ermittelt, wann das Probe-Werkstück und das Schleifband einander berühren und wann nicht. Beim nachfolgenden serienmässigen Schleifen von Werkstücken wird in den Abschnitten, in welchen beim Schleifen des Probe-Werkstücks eine Berührung stattfand, der Stellantrieb kraftgeregelt und in jenen Abschnitten, in welchen keine Berührung stattfand, positionsgeregelt.

Im Artikel "Constraint-combined Force / Position Hybrid Control Method for Continuous Shape-grinding" von Guanghua Chen et al., SCIS & ISIS 2010, Dec. 8-12, 2010, Okayama Convention Center, Okayama, Japan, ist ein Verfahren zum Betreiben einer Schleifvorrichtung zum Schleifen von gekrümmten Oberflächen beschrieben, welches ohne Kraftsensoren auskommt.

Es ist eine Aufgabe der vorliegenden Erfindung, das in der älteren europäische Anmeldung Nr. 14 002 470.4 offenbarte Verfahren derart weiterzubilden und eine entsprechende Schleifvorrichtung zu schaffen, dass auch grössere und schwerere Werkstücke bearbeitbar sind.

Diese Aufgabe wird mit dem Verfahren gemäss Anspruch 1 und einer Schleifvorrichtung gemäss Anspruch 13 gelöst.

Eine Bandschleifvorrichtung, welche mit dem erfindungsgemässen Verfahren betrieben wird, weist ein Bandschleifgerät mit einem wenigstens um eine Antriebsrolle und eine Kontaktrolle herumgeführten, in sich geschlossenen Schleifband und ein programmgesteuertes Handhabungsgerät auf, dessen Endeffektor das Bandschleifgerät trägt. Zum Schleifen eines Werkstücks bewegt das Handhabungsgerät das Bandschleifgerät entlang einer vorbestimmten, programmierten Bewegungsbahn.

Die Schleifvorrichtung weist weiter eine Haltevorrichtung mit einem Halteorgan zum Halten des zu schleifenden Werkstücks, ein Kraftmessorgan zum Messen der Kraft, mit welcher das Schleifband auf das Werkstück einwirkt, einen Stellantrieb zum relativ zueinander Bewegen der Kontaktrolle und des Halteorgans sowie ein Positionsmessorgan zum Erfassen der Position des Stellantriebs auf.

Nach erfolgter Programmierung der Bewegungsbahn wird, mit zurück drängbarem Stellantrieb, ein Probe-Werkstück geschliffen und dabei werden kontinuierlich die oben genannte Kraft und die Position des Stellantriebs mittels des Kraftmessorgans und des Positionsmessorgans erfasst; die entsprechenden Daten werden gespeichert.

Aus diesen Daten werden die Berührungs-Abschnitte der Bewegungsbahn, in welchen das Schleifband am Probe-Werkstück zum Schleifen anliegt, und die Berührungsfrei-Abschnitte der Bewegungsbahn, in welchen das Schleifband und das Werkstück relativ zu einander berührungsfrei sind, ermittelt. Beim nachfolgenden Schleifen von Werkstücken wird der Stellantrieb mittels eines Reglers mit den gespeicherten Daten als Führungsgrösse in den Berührungs-Abschnitten kraftgeregelt und in den Berührungsfrei-Abschnitten positionsgeregelt.

Zum Schleifen des Probe-Werkstücks ist der Stellantrieb vorzugsweise derart gesteuert, dass er zurückdrängbar ist in Abhängigkeit von der Kraft, mit welcher das Schleifband mittels des Handhabungsgeräts gegen das Probe-Werkstück gedrückt wird. Die Kraft/Weg-Charakteristik kann dabei durch entsprechende Ansteuerung des Stellantriebs beispielsweise linear entsprechend einer Federcharakteristik gewählt werden. Es ist jedoch auch denkbar, dem Stellantrieb in dieser Phase eine andere Charakteristik zugrunde zu legen.

Die Planung und Programmierung der Bewegungsbahn kann softwareunterstützt durch Offline Simulation und/oder Online an der Bandschleifvorrichtung durch eine Fachperson iterativ erfolgen.

Da das programmgesteuerte Handhabungsgerät eine programmierte Bewegungsbahn auch zeitlich immer identisch durchläuft, werden bevorzugt die Daten zusammen mit einer Zeitinformation gespeichert und aus den Daten und der Zeitinformation die den Berührungs-Abschnitten entsprechenden Berührungs-Zeitabschnitte und die den Berührungsfrei-Abschnitten entsprechenden Berührungsfrei-Zeitabschnitte bestimmt. Dabei werden für jeden Berührungs-Abschnitt und für jeden Berührungsfrei-Abschnitt die Anfangs- und die Endzeit bestimmt und gespeichert. Zum Schleifen der Werkstücke wird dann der Stellantrieb in den Berührungs-Zeitabschnitten kraftgeregelt und in den Berührungsfrei-Zeitabschnitten positionsgeregelt.

Bevorzugt sind der Stellantrieb, das Kraftmessorgan und das Positionsmessorgan der Haltevorrichtung zugeordnet. Die von der Kontaktrolle über das Werkstück auf den Stellantrieb ausgeübte Kraft wird vorzugsweise kontinuierlich mittels des Kraftmessorgans erfasst.

Dies hat den Vorteil, dass das Handhabungsgerät das Bandschleifgerät, jedoch nicht zusätzlich den Stellantrieb, das Kraftmessorgan und das Positionsmessorgan tragen und bewegen muss.

Es ist jedoch auch denkbar, den Stellantrieb, das Kraftmessorgan und das Positionsmessorgan dem Bandschleifgerät zuzuordnen und derart auszubilden, wie dies in der älteren europäischen Anmeldung Nr. 14 002 470.4 offenbart ist. Die Offenbarung dieser älteren Anmeldung ist somit durch Referenzname in die vorliegende Anmeldung integriert.

Der der Haltevorrichtung zugeordnete Stellantrieb kann stationär angeordnet sein, wobei der Stellantrieb das Halteorgan trägt.

Bevorzugt weist die Haltevorrichtung einen das Halteorgan tragenden Roboter auf, welcher auch den Stellantrieb bildet. Mit dieser Ausführungsform besteht die Möglichkeit, mittels des Roboters das Probe-Werkstück und die Werkstücke während des Schleifens zu bewegen oder zwischen dem Schleifen eines Bereichs und dem Schleifen eines weiteren Bereichs in eine unterschiedliche Lage und/oder Position zu verbringen. Dies ermöglicht das Schleifen komplizierter Geometrien.

In bevorzugter Weise ist der Roboter als Portalroboter ausgebildet. Bevorzugt weist der Roboter einen entlang einer Hauptachse bewegbaren Hauptschlitten, einen am Hauptschlitten in einer rechtwinklig zur Hauptachse verlaufenden ersten Richtung bewegbaren ersten Arm sowie einen an diesem in einer rechtwinklig zur Hauptachse und zur ersten Richtung verlaufenden zweiten Richtung bewegbaren zweiten Arm auf. An Letzterem ist das Halteorgan zum Halten des Probe-Werkstücks und der Werkstücke angeordnet.

Bevorzugt ist der Stellantrieb durch je ein dem Hauptschlitten, dem ersten Arm und dem zweiten Arm zugeordnetes Stellantriebsorgan gebildet. Dementsprechend sind bevorzugt das Positionsmessorgan und das Kraftmessorgan durch je ein dem Hauptschlitten, dem ersten Arm und dem zweiten Arm zugeordnetes Positionsmesselement beziehungsweise Kraftmesselement gebildet. Mittels der Kraftmesselemente wird die von der Kontaktrolle des Bandschleifgeräts über das Werkstück auf die Stellantriebsorgane ausgeübte Kraft kontinuierlich mittels der Kraftmesselemente erfasst.

Durch diese Ausführungsform kann die Kraft direkt in den drei Koordinaten gemessen werden.

Bevorzugt wird zwischen dem Arbeitspunkt des Bandschleifgeräts und dem Arbeitspunkt des Werkstücks eine Wirklinie definiert und wird das Werkstück vom Roboter entlang dieser Wirklinie kraftgeregelt bewegt. Auch dazu dienen der Stellantrieb und das Kraftmessorgan beziehungsweise die Stellantriebsorgane und die Kraftmesselemente. Die durch die Wirklinie hervorgerufene Bewegung ist üblicherweise sehr klein im Vergleich zur Bewegung des Bandschleifgeräts entlang der Bewegungsbahn. Es erfolgt quasi eine kleine Korrektur der Bewegungsbahn entlang der Wirklinie um den Regelfehler zu minimieren.

Bevorzugt handelt es sich beim Handhabungsgerät um einen Industrieroboter. Es ist bevorzugt mittels einer programmierbaren Gerätesteuerung zum Bewegen des Bandschleifgeräts entlang der vorprogrammierten Bewegungsbahn gesteuert. Bevorzugt wird der Stellantrieb beziehungsweise der Roboter mittels eines den Regler bildenden, die Daten speichernden, programmierbaren Kontrollers geregelt. Gegebenenfalls gibt die Gerätesteuerung an den Kontroller die die Zeitinformation bestimmende Synchronisationssignale ab, wodurch die Daten synchron mit der Bewegung des Handhabungsgeräts gespeichert beziehungsweise zur Regelung aus dem Speicher ausgelesen werden können.

Bevorzugt wird mittels der Daten für unterschiedliche Abschnitte der Bewegungsbahn jeweils eine Regelstreckenidentifikation durchgeführt, wodurch die unterschiedlichen Steifigkeiten des Handhabungsgeräts bei der Steuerung und Regelung berücksichtigt werden können. Zum Schleifen der Werkstücke berücksichtigt der Regler beim Durchlaufen des jeweiligen Abschnitts der Bewegungsbahn, die diesem Abschnitt zugeordnete Regelstreckenidentifikation. Dadurch ist eine äusserst genaue Bearbeitung möglich.

Bevorzugt werden die Regelparameter gespeichert und zwar zugeordnet den beim Schleifen des Probe-Werkstücks kontinuierlich erfassten Kraft- und Positionsdaten in den Berührungs-Abschnitten beziehungsweise Berührungs-Zeitabschnitten. Bevorzugt erfolgt dies auch für die Berührungsfrei-Abschnitte beziehungsweise die Berührungsfrei-Zeitabschnitte. Dies kann unter dem Begriff "Prozessvorsteuerung" subsummiert werden.

Weiter wird bevorzugt eine auf die Kontaktrolle rechtwinklig zu einer Andruckkraft einwirkende Kraftkomponente ermittelt. Diese kann weitere Aussagen zur effektiv wirkenden Schleifkraft zulassen. Weiter kann dadurch der resultierende Spanabtrag abgeschätzt werden. Mit der Spanabtraginformation können die freien, spanabtragrelevanten Prozessparameter vorgesteuert werden, um einen wenigstens nahezu konstanten Spanabtrag trotz kontinuierlichem Schleifbandverschleiss zu gewährleisten.

Mit Andruckkraft liegt das Werkstück jeweils am Schleifband an. Es ist möglich, dass das Kraftmessorgan auch diese Kraftkomponente misst. Aus den Daten des Kraftmessorgans beziehungsweise der Kraftmesselemente ist eine den Verschleiss des Schleifbandes charakterisierende Verschleissinformation ermittelbar. Dies ermöglicht die Berücksichtigung des jeweils aktuellen Zustandes des Schleifbandes bei der Steuerung der Schleifvorrichtung. Vorzugsweise wird die Antriebsgeschwindigkeit des Schleifbandes und/oder die Andruckkraft, mit welcher das Werkstück jeweils am Schleifband anliegt, auf Basis der Verschleissinformation auf wenigstens annährend konstanten Spanabtrag geregelt.

Mittels der Verschleissinformation wird auch eine zustandsabhängige Wartung und ein zustandsabhängiger Schleifbandwechsel ermöglicht.

Bevorzugt wird aus den Signalen des Kraftmessorgans, des Positionssensors, der Prozesszeit, oder gegebenenfalls des Kraftelements zu den jeweiligen Berührungssituationen des Werkstücks mit dem Schleifband - das heisst in den Berührungs-Abschnitten beziehungsweise Berührungs-Zeitabschnitten - ein Frequenzspektrum ermittelt. Aus der Fourier Transformation beziehungsweise Fast Fourier Transformation lassen sich Informationen zur Prozessdynamik ermitteln, so beispielsweise zu den Kontaktsituationen, zu Ratterschwingungen, zur Schleifleistung, zum Zustand der Bandschleifvorrichtung, wie das Flattern des Schleifbandes, die Drehzahl, Unwucht der Rollen, usw.

Entsprechend können die Daten des Kraftmessorgans, des Positionssensors, die Prozesszeit und gegebenenfalls des Kraftmesselements zur Prozessoptimierung und/oder Prozessregelung verwendet werden.

Bevorzugt ist die Bewegungsbahn derart ausgelegt, dass die Berührung zwischen dem Probe-Werkstück beziehungsweise den Werkstücken und dem Schleifband immer im Bereich der Umschlingung des Schleifbandes um die Kontaktrolle erfolgt. Es ist jedoch auch denkbar, die Bewegungsbahn derart festzulegen, dass die Berührung ausserhalb des Umschlingungsbereichs stattfindet.

Der Vollständigkeit halber sei erwähnt, dass die Kontaktrolle bevorzugt einen unelastischen Rollenkern und ein darauf angeordnetes elastisches Laufpolster aufweist, welches vom Schleifband umschlungen ist.

Bevorzugt werden die statische und die dynamische Systemsteifigkeit des Handhabungsgeräts in den verschiedenen Berührungs-Abschnitten beziehungsweise den entsprechenden Berührungs-Zeitabschnitten ermittelt, aufgrund welcher eine Modellidentifikation durchgeführt werden kann. Beispielsweise analog der Offenbarung im Fachartikel "Modelling and Control of Robot aided Belt Grinding Manufacturing Processes" von R. Anderegg und M. Edelmann, International Conference on Innovative Technologies, IN-TECH 2013, Budapest. Die Offenbarung dieses Fachartikels gelte durch Bezugnahme in die vorliegende Offenbarung aufgenommen. Die Systemidentifikation erlaubt optimale Parameter des Reglers zu ermitteln und zwar für jeden Schleifabschnitt.

Bevorzugt werden die Regelparameter gespeichert und zwar zugeordnet, den beim Schleifen des Muster-Werkstücks kontinuierlich erfassten Kraft- und Positionsdaten in den Berührungs-Abschnitten beziehungsweise Berührungs-Zeitabschnitten. Bevorzugt erfolgt dies auch für die Berührungsfrei-Abschnitte beziehungsweise die Berührungsfrei-Zeitabschnitte. Dies kann unter dem Begriff "Prozessvorsteuerung" subsummiert werden (nach oben verschieben, zu unterschiedliche Nachgiebigkeiten des Handhabungsgeräts).

Das Handhabungsgerät beziehungsweise der Industrieroboter weist bevorzugt mindestens sechs Freiheitsgrade zum Bewegen, freien Positionieren und Orientieren des Bandschleifgeräts auf.

Die Erfindung wird anhand eines in der Zeichnung dargestellten Ausführungsbeispiels näher erläutert. Es zeigen rein schematisch:
- Fig. 1: eine Schleifvorrichtung mit einem ein Bandschleifgerät tragenden Handhabungsgerät und einer als Auslegerportalroboter ausgebildeten Haltevorrichtung zum Halten eines Werkstücks während es geschliffen wird;
- Fig. 2: das in der Fig. 1 gezeigte Bandschleifgerät und das Werkstück zur Verdeutlichung einer Wirklinie zwischen den Arbeitspunkten des Bandschleifgeräts und des Werkstücks; und
- Fig. 3: ein Beispiel aus einem Weg- und Kraftdiagramm in Funktion der Zeit beim Schleifen eines Probe-Werkstücks.

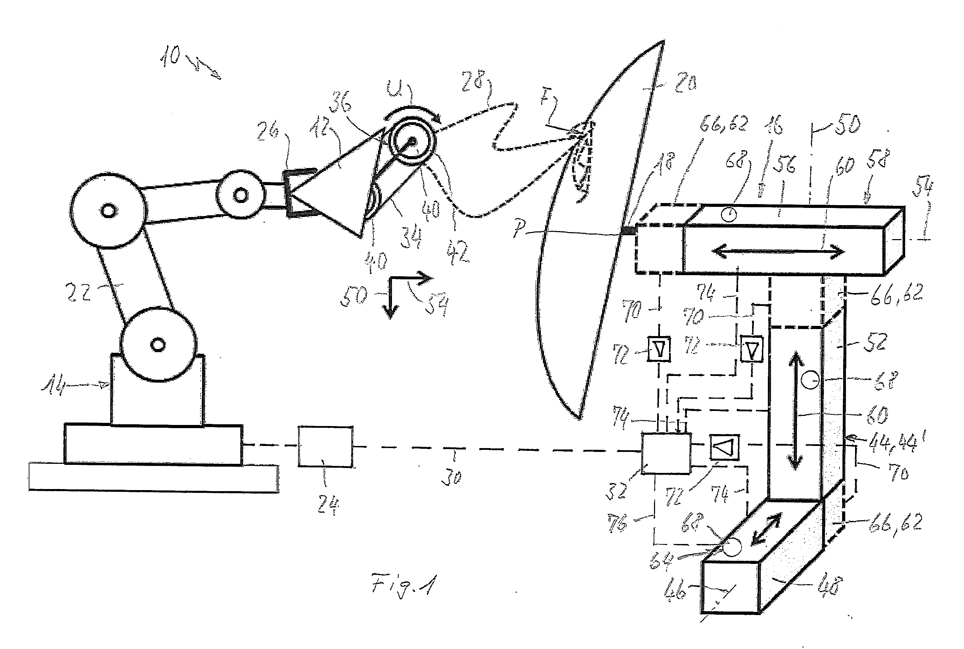

Fig. 1 zeigt eine Schleifvorrichtung 10, hier eine Bandschleifvorrichtung, mit einem ein Bandschleifgerät 12 tragenden Handhabungsgerät 14 und einer Haltevorrichtung 16, welche mit ihrem Halteorgan 18 ein Werkstück 20 während des Schleifens dieses Werkstücks 20 mit dem Bandschleifgerät 12 hält.

Das Handhabungsgerät 14 ist durch einen Industrieroboter 22 gebildet, welcher wie im gezeigten Ausführungsbeispiel vorzugsweise als Zweiarm-Roboter mit sechs Freiheitsgraden ausgestaltet ist.

Im Folgenden soll im Zusammenhang mit der Figurenbeschreibung der Begriff Industrieroboter 22 auch Handhabungsgerät 14 bedeuten und umgekehrt.

Dem Industrieroboter 22 ist eine programmierbare Gerätesteuerung 24, beispielsweise eine Speicherprogrammierbare Steuerung SPS zugeordnet, welche einerseits den Industrieroboter 22 derart ansteuert, dass dessen Endeffektor 26 das von ihm gehaltene Bandschleifgerät 12 entlang einer vorbestimmten, programmierten Bewegungsbahn 28 bewegt, und andererseits über eine Leitung 30 ein Synchronisationssignal an einen hier dem Halteorgan 18 zugeordneten Kontroller 32 abgibt.

Von der Bandschleifmaschine 12 ist in Fig. 1, neben einer Abdeckung, ein in sich geschlossenes Schleifband 34 gezeigt, welches um eine Kontaktrolle 36 und eine Antriebsrolle 38 geführt ist. Der Pfeil U gibt die Drehrichtung der Kontaktrolle und somit die Laufrichtung des Schleifbandes 34 an. Die Kontaktrolle 32 weist auf einem unelastischen Rollenkern 40 ein elastisches Laufpolster 42 auf, an welchem das Schleifband 34 anliegt.

Die Antriebsrolle 38 ist mittels eines vorzugsweise in seiner Drehzahl regelbaren Elektromotors angetrieben.

In der in der Fig. 1 gezeigten Ausführungsform ist die Haltevorrichtung 16 durch einen Roboter 44 in der Form eines Auslegerportals 44' gebildet. Sie könnte jedoch auch durch einen Industrieroboter oder einen Portalroboter anderer Art gebildet sein. Es ist auch möglich, dass die Haltevorrichtung 16 durch einen programmgesteuerten Kreuztisch, Drehtisch, Kopiertisch und dergleichen gebildet ist. Im Folgenden wird vereinfacht der Begriff Roboter 44 verwendet.

Der Roboter 44 weist einen entlang einer (hier horizontalen) Hauptachse 46 bewegbaren Hauptschlitten 48 auf. Am Hauptschlitten 48 ist ein, in einer rechtwinklig zur Hauptachse 46 (hier in vertikaler Richtung) verlaufenden ersten Richtung 50 bewegbarer erster Arm 52 angeordnet.

An diesem ist ein, in einer rechtwinklig zur Hauptachse 46 und zur ersten Richtung 50 (hier horizontal) verlaufenden zweiten Richtung 54 bewegbarer zweiter Arm 56 angeordnet. Dieser trägt das Halteorgan 18 zum Halten des Werkstücks 20.

Mittels eines Stellantriebs 58, welcher im gezeigten Ausführungsbeispiel durch je ein dem Hauptschlitten 48, dem ersten Arm 52 und dem zweiten Arm 56 zugeordnetes Stellantriebsorgan 60 gebildet ist, ist das Halteorgan 18 räumlich in den drei Achsen 46, 50, 54 verstellbar.

Der Vollständigkeit halber sei erwähnt, dass es auch denkbar ist, das Halteorgan 18 um die zweite Richtung 54 mittels eines entsprechenden Stellantriebsorgans drehbar auszubilden.

Weiter sind dem Roboter 44 ein Kraftmessorgan 62 zum Messen der Kraft, mit welcher das Schleifband 34 auf das Werkstück 20 einwirkt, sowie ein Positionsmessorgan 64 zum Erfassen der Position des Stellantriebs 58 zugeordnet.

Im gezeigten Ausführungsbeispiel ist das Kraftmessorgan 62 durch je ein dem Hauptschlitten 48, dem ersten Arm 52 und dem zweiten Arm 56 zugeordnetes Kraftmesselement 66 gebildet um die in Richtung der betreffenden Achse 46, 50, 54 wirkende Kraft zu messen.

Entsprechend ist im gezeigten Ausführungsbeispiel das Positionsmessorgan 64 durch je ein dem Hauptschlitten 48, dem ersten Arm 52 und dem zweiten Arm 56 zugeordnetes Positionsmesselement 68 gebildet, um zur Regelung die Position des Halteorgans 18 zu kennen.

Anstelle der Kraftmesselemente 66 könnte das Kraftmessorgan 62 beispielsweise in das Halteorgan 18 integriert sein. Ebenfalls ist es möglich, anstelle der Positionsmesselemente 68 ein Positionsmessorgan 64 vorzusehen, welches direkt die Position und gegebenenfalls die Lage des Halteorgans 18 misst.

Das Kraftmessorgan 62 übermittelt beziehungsweise die Kraftmesselemente 66 übermitteln die kontinuierlich gemessenen, der Kraft F, mit welcher das Bandschleifgerät 12 auf das Werkstück 20 einwirkt, entsprechenden Kraftsignale über Kraftsensorleitungen 70 an den Kontroller 32, gegebenenfalls unter Zwischenschaltung eines Messverstärkers 72. Der Stellantrieb 58 beziehungsweise die Stellantriebsorgane 60 sind über eine elektrische Leitung 74 ebenfalls mit dem Kontroller 32 verbunden, wobei über diese Leitung 74 vom Kontroller 32 Steuersignale an den Stellantrieb 58 beziehungsweise die Stellantriebsorgane 60 übermittelt werden.

Entsprechend ist das Positionsmessorgan 64 beziehungsweise sind die Positionsmesselemente 68 über eine Positionssignalleitung 76 mit dem Kontroller 32 verbunden, um die kontinuierlich ermittelten Positionssignale an den Kontroller 32 zu übermitteln.

Der Kontroller 32 weist eine Regeleinheit auf oder er ist als solche programmiert.

Die Signale des Kraftmessorgans 62 beziehungsweise der Kraftmesselemente 66 und des Positionsmessorgans 64 beziehungsweise der Positionsmesselemente 68 werden beim Schleifen eines Probe-Werkstücks einem Speicher des Kontrollers 32 und beim darauf folgenden Schleifen der Werkstücke 20 der Regeleinheit und vorzugsweise auch dem Speicher zugeführt. Die Regeleinheit leitet über ein Schaltelement, in Abhängigkeit von der Berührungssituation des Werkstücks 20 mit dem Schleifband 34, entweder das Kraftsignal oder das Positionssignal an einen Regler, im vorliegenden Fall beispielsweise einem PID-Regler, als Ist-Wert weiter. Die vom Regler erzeugten Steuersignale werden dem Stellantrieb 58 beziehungsweise den Stellantriebsorganen 60 zugeleitet.

Der Stellantrieb 58 beziehungsweise die Stellantriebsorgane 60 sind mit den kontinuierlich gemessenen Grössen Kraft F (mittels des Kraftmessorgans 62 beziehungsweise den Kraftmesselementen 66) und Position P (mittels des Positionsmessorgans 64 beziehungsweise der Positionsmesselemente 68) in den Regelkreis integriert.

Wie dies weiter unten näher erläutert ist, werden dem Regelkreis als Führungsgrösse entweder die gespeicherten Positionsdaten oder die gespeicherten Kraftdaten zugeführt, welche beim Schleifen des Probe-Werkstücks 20 gemessen und gespeichert worden sind.

Für die negative Rückkopplung werden beim dem Schleifen des Probe-Werkstücks 20 folgende Schleifen der Werkstücke 20 kontinuierlich die auf das Kraftmessorgan 62 beziehungsweise die Kraftmesselemente 66 wirkende Kraft F sowie mittels des Positionsmessorgans 64 beziehungsweise den Positionsmesselementen 68 die Position P des Stellantriebs 58 beziehungsweise der Stellantriebsorgane 60 erfasst und mittels der Prozessüberwachung wird, je nachdem, ob kraftgeregelt oder positionsgeregelt wird, der entsprechende Ist-Wert als Regelgrösse zurückgeführt. Die Regelabweichung wird dem Regler zugeführt, dessen ausgangsseitige Stellgrösse dem Stellantrieb 58 beziehungsweise den Stellantriebsorganen 60 und der übrigen Regelstrecke zugeführt wird. Dies analog Fig. 7 der älteren europäischen Anmeldung Nr. 14 002 470.4.

Vorzugsweise werden auch beim Schleifen der Werkstücke 20 die gemessenen Kraft- und Positionsdaten zusammen mit der Zeitinformation im Speicher des Kontrollers 32 gespeichert.

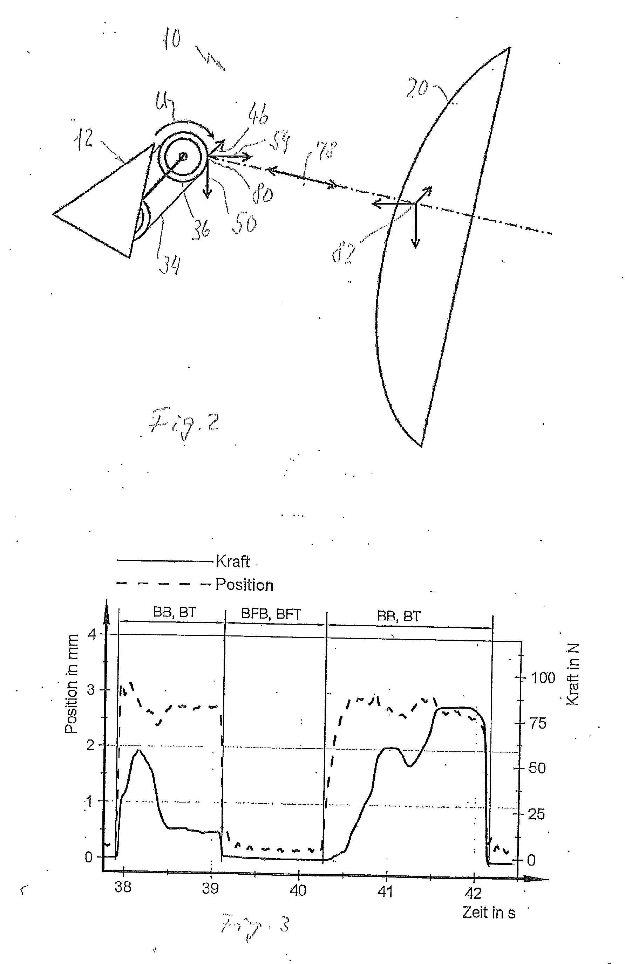

In Fig. 2 ist schematisch die Definition einer Wirklinie 78 zwischen einem Arbeitspunkt 80 des Bandschleifgeräts 12 und einem Arbeitspunkt 82 des Werkstücks 20 dargestellt. Die beiden Arbeitspunkte 80 und 82 befinden sich in entsprechenden Arbeitspunktpositionen, bezogen auf die Hauptachse 46, die erste Richtung 50 und die zweite Richtung 54. Dies erfolgt vorzugsweise im Kontroller 32, welcher beim Schleifen des Werkstücks 20 den Roboter 44 derart ansteuert, dass das Werkstück entlang der Wirklinie 78 kraftgeregelt bewegt wird.

Das vorliegende Verfahren zum Betreiben der Schleifvorrichtung 10 geht davon aus, dass die Bewegungsbahn 28 zum Schleifen der Werkstücke 20 durch eine Bahnplanung erfolgt ist. Es ist möglich, dass die Bahnplanung und die damit verbundene Programmierung der Bewegungsbahn 28 online an der Schleifvorrichtung 10 erfolgt, indem eine Bedienperson iterativ die Bewegungsbahn 28 mittels der Gerätesteuerung 24 festlegt, wie dies allgemein bekannt ist. Die Bahnplanung kann auch Software unterstützt durch eine offline Simulation erfolgen.

Bei der Bahnplanung wird, falls dies die Geometrie des Werkstücks 20 erforderlich macht, auch die Bewegung des Roboters 44 programmiert, um das Werkstück 20 für bestimmte Schleifabschnitte in eine bestimmte Position und/oder Lage zu bringen. Dies erfolgt über die Programmierung am Kontroller 32.

Nachdem die Bewegungsbahn 28 zum Schleifen der Werkstücke 20 festgelegt und in der Gerätesteuerung 24 gespeichert und entsprechend die Positionen und Lagen des Werkstücks 20 ebenfalls festgelegt und zur entsprechenden Ansteuerung des Roboters 44 im Kontroller 32 gespeichert sind, wird ein (vorzugsweise einziges) Muster-Werkstück 20 geschliffen, wobei das Bandschleifgerät 12 mittels des Handhabungsgeräts 14, im vorliegenden Fall des Industrieroboters 22, entlang der gespeicherten Bewegungsbahn 28 bewegt wird. Gegebenenfalls wird dabei auch das Werkstück 20 für unterschiedliche Schleifabschnitte mittels des Roboters 44 in die entsprechende Position und Lage verbracht.

Beim Schleifen des Probe-Werkstücks 20 wird der Stellantrieb 58 und werden somit die Stellantriebsorgane 60 in Abhängigkeit von der Kraft, mit welcher das Schleifband 34 am Werkstück 20 anliegt, zurückdrängbar angesteuert. Dies kann beispielsweise entsprechend einer einfachen, gegebenenfalls linearen Federcharakteristik erfolgen.

Zu Beginn des Prozesses gibt die Gerätesteuerung 24 über die Leitung 30 an den Kontroller 36 ein Synchronisationssignal ab. Beim Durchlaufen der Bewegungsbahn 28 werden im Kontroller 32 kontinuierlich sowohl die vom Positionsmessorgan 64, beziehungsweise den Positionsmesselementen 68, als auch die vom Kraftmessorgan 62 beziehungsweise den Kraftmesselementen 66 erfassten Positions- und Kraftdaten in Abhängigkeit von der (Prozess-) Zeit und somit auch in Abhängigkeit vom aktuellen Ort der Bewegungsbahn 28 gespeichert.

Fig. 3 zeigt schematisch die Zeit - und somit bezüglich der Bewegungsbahn 28 wegabhängigen Kraft- und Positionsdaten für einen Teil der Bewegungsbahn 28 beim Schleifen des Probe-Werkstücks 20.

Diese Kraft- und Positionsdaten fallen in den drei Richtungen der Hauptachse 46, der ersten Richtung 50 und der zweiten Richtung 54 an. Es besteht die Möglichkeit, die entsprechenden Daten in jeder dieser Richtungen auszuwerten. Es ist jedoch auch möglich, diese vektoriell zu addieren und dann die entsprechende Auswertung vorzunehmen.

Ist eine Berührung zwischen dem Probe-Werkstück 20 und dem Schleifband 34 gegeben, steigt entsprechend das Kraftsignal als auch das Positionssignal des Stellantriebs 58 beziehungsweise der Stellantriebsorgane 60 an. Ist der entsprechende Schleifabschnitt am Probe-Werkstück 20 beendet, hebt infolge der programmierten Bewegungsbahn 28 das Bandschleifgerät 12 vom Probe-Werkstück 20 ab, was dadurch erkennbar ist, dass das Positionssignal auf Null und das Kraftsignal auf einen tieferen Wert abfallen. Kommt zum Schleifen eines weiteren Schleifabschnitts das Schleifband 34 wiederum am Werkstück 20 zur Anlage, steigen entsprechend die Kraft- und Positionssignale wieder an bis zum nächsten Abheben des Bandschleifgeräts 12 und entsprechend des Schleifbands 34 vom Probe-Werkstück 20.

Aus den erfassten Kraftdaten und Positionsdaten lassen sich nach dem Schleifen des Probe-Werkstücks 20 auf einfache Art und Weise die Berührungs-Abschnitte BB der Bewegungsbahn 28 und die entsprechenden Berührungs-Zeitabschnitte BT, in welchen das Schleifband 34 das Probe-Werkstück 20 bearbeitet hat, festlegen. Auf genau gleiche Art und Weise lassen sich die Berührungsfrei-Abschnitte BFB der Bewegungsbahn 28 und die entsprechenden Berührungsfrei-Zeitabschnitte BFT, in welchen das Bandschleifgerät 12 vom Werkstück 20 abgehoben war, festlegen und im Speicher des Kontrollers 32 mit den entsprechenden Ort- beziehungsweise (Prozess-) Zeitinformation speichern.

Dies kann unter den Schritt "Systemidentifikation" subsummiert werden.

Bevorzugt werden mittels dieser Daten und bevorzugt unter Berücksichtigung der Nachgiebigkeit des Industrieroboters 22 und bevorzugt des Roboters 44 in Abschnitten der Bewegungsbahn 28 die Regelparameter des Reglers, welcher beispielsweise ein Standard PIDT-Regler sein kann, festgelegt und ebenfalls den Ort- beziehungsweise der (Prozess-) Zeitinformation zugeordnet gespeichert.

In einem Schritt "Prozessvorsteuerung" werden die oben erwähnten, beim Schleifen des Probe-Werkstücks 20 erfassten und daraus ermittelten Daten sowie gegebenenfalls die Regel-Parameter vom Speicher in den Arbeitsspeicher des Kontrollers 32 geladen.

Anschliessend kann das serienmässige Schleifen der - mit dem Probe-Werkstück artgleichen - Werkstücke 20 beginnen, indem jedes dieser Werkstücke 20 mittels des Roboters 44 gehalten und das Bandschleifgerät 12 mittels des Industrieroboters 22 entlang der Bewegungsbahn 28 bewegt wird.

Zu Beginn jedes Prozesses gibt die Gerätesteuerung 24 über die Leitung 30 an den Kontroller 32 ein Synchronisationssignal ab, sodass der Kontroller 32 synchron mit dem Durchlaufen der Bewegungsbahn 28 beziehungsweise der entsprechenden (Prozess-) Zeit die gespeicherten Daten der Regeleinheit zur Steuerung des Roboters 44 zuführt.

Liegt dabei ein Berührungs-Abschnitt BB beziehungsweise ein Berührungs-Zeitabschnitt BT vor, erfolgt die Regelung des Stellantriebs 58 beziehungsweise der Stellantriebsorgane 60 kraftabhängig. Liegt jedoch ein berührungsfrei-Anbschnitt BFB beziehungsweise berührungsfrei-Zeitabschnitt BFT vor, erfolgt die Regelung des Stellantriebs 58 beziehungsweise der Stellantrieborgane 60 positionsabhängig.

Aus den beim Schleifen der Werkstücke 20 erfassten Daten des Kraftmessorgans 24 beziehungsweise der Kraftmesselemente 66 kann eine den Verschleiss des Schleifbandes 34 charakterisierende Verschleissinformation ermittelt werden. Darauf gestützt kann beispielsweise die Antriebsgeschwindigkeit des Schleifbandes 34 und/oder die Andrückkraft F, mit welcher das Schleifband 34 jeweils am Werkstück 20 anliegt, auf wenigstens annähernd konstanten Spanabtrag geregelt werden.

Aus den sowohl beim Schleifen des Probe-Werkstücks als auch dem nachfolgenden (Serie-) Schleifen von Werkstücken 20 gemessenen Daten des Kraftmessorgans 62 beziehungsweise der Kraftmesselemente 66 und/oder des Positionsmessorgans 64 beziehungsweise der Positionsmesselemente 68 können Frequenzspektren zu den jeweiligen Berührungsabschnitten BB beziehungsweise Berührungs-Zeitabschnitten BT ermittelt werden. Wie in der Einleitung dargelegt, lassen sich daraus Informationen zur Prozessdynamik ermitteln, so beispielsweise zu den Kontaktsituationen, zu Ratterschwingungen, zur Schleifleistung, zum Zustand der Bandschleifvorrichtung (wie das Flattern des Schleifbandes), die Drehzahl, die Unwucht von Rollen, usw.

Entsprechend lassen diese Daten eine Prozessoptimierung und/oder Prozessregelung zu, um nicht erwünschte Erscheinungen zu vermeiden.

Es ist auch denkbar den Stellantrieb 58, das Kraftmessorgan 62 und das Positionsmessorgan 64 dem Handhabungsgerät 14 zuzuordnen und dieses entsprechend mittels des Kontrollers, welcher in die Gerätesteuerung 24 integriert sein kann, entsprechend zu regeln.

## Patentansprüche

1. Verfahren zum Betreiben einer Schleifvorrichtung (10) mit einem ein wenigstens um eine Kontaktrolle (36) und eine Antriebsrolle (38) herumgeführtes, in sich geschlossenes Schleifband (34) aufweisenden Bandschleifgerät (12), einem programmgesteuerten, einen das Bandschleifgerät (12) tragenden Endeffektor (26) aufweisenden Handhabungsgerät (14), welches zum Schleifen eines Werkstücks (20) das Bandschleifgerät (12) entlang einer vorbestimmten, programmierten Bewegungsbahn (28) bewegt, einer ein Halteorgan (18) zum Halten des Werkstücks (20) aufweisenden Haltevorrichtung (16), einem Kraftmessorgan (62) zum Messen der Kraft (F), mit welcher das Schleifband (34) auf das Werkstück (20) einwirkt, einem Stellantrieb (58) zum relativ zueinander Bewegen der Kontaktrolle (36) und des Halteorgans (18), sowie einem Positionsmessorgan (64) zum Erfassen der Position (P) des Stellantriebs (58), wobei, nach erfolgter Programmierung der Bewegungsbahn (28), ein Probe-Werkstück (20) - mit zurück drängbarem Stellantrieb (58) - geschliffen und dabei kontinuierlich die Kraft (F) und die Position (P) des Stellantriebs (58) mittels des Kraftmessorgans (62) und des Positionsmessorgans (64) erfasst sowie die entsprechenden Daten gespeichert werden, aus diesen Daten die Berührungs-Abschnitte (BB) der Bewegungsbahn (28), in welchen das Schleifband (34) am Probe-Werkstück (20) zum Schleifen anliegt, und die Berührungsfrei-Abschnitte (BFB) der Bewegungsbahn (28), in welchen das Schleifband (34) und das Werkstück (20) relativ zu einander berührungsfrei sind, ermittelt werden, und dann zum Schleifen der Werkstücke (20) der Stellantrieb (58) mittels der gespeicherten Daten in den Berührungs-Abschnitten (BB) kraftgeregelt und in den Berührungsfrei-Abschnitten (BFB) positionsgeregelt wird.

2. Verfahren nach Anspruch 1, **dadurch gekennzeichnet, dass** die Daten zusammen mit einer Zeitinformation gespeichert werden, aus den Daten und der Zeitinformation die den Berührungsabschnitten (BB) entsprechenden Berührungs-Zeitabschnitte (BT) und die den Berührungsfrei-Abschnitten (BFB) entsprechenden Berührungsfrei-Zeitabschnitte (BFT) bestimmt werden, und dann zum Schleifen der Werkstücke (20) der Stellantrieb (58) in den Berührungs-Zeitabschnitten (BT) kraftgeregelt und in den Berührungsfrei-Zeitabschnitten (BFT) positionsgeregelt wird.

3. Verfahren nach Anspruch 1 oder 2, **dadurch gekennzeichnet, dass** der Stellantrieb (58), das Kraftmessorgan (62) und das Positionsmessorgan (64) der Haltevorrichtung (16) zugeordnet sind und die von der Kontaktrolle (32) über das Werkstück (20) auf den Stellantrieb (58) ausgeübte Kraft (F) kontinuierlich mittels des Kraftmessorgans (62) erfasst wird.

4. Verfahren nach Anspruch 3, **dadurch gekennzeichnet, dass** die Haltevorrichtung (16) einen den Stellantrieb (58) beinhaltenden Roboter (44) mit dem Halteorgan (18) aufweist.

5. Verfahren nach Anspruch 4, **dadurch gekennzeichnet, dass** der Roboter (44) einen entlang einer Hauptachse (46) bewegbaren Hauptschlitten (48), einen am Hauptschlitten (48) in einer rechtwinklig zur Hauptachse (46) verlaufenden ersten Richtung (50) bewegbaren ersten Arm (52) sowie einen an diesem in einer rechtwinklig zur Hauptachse (46) und zur ersten Richtung (50) verlaufenden zweiten Richtung (54) bewegbaren, zweiten Arm (56), an welchen das Halteorgan (18) angeordnet ist, aufweist, der Stellantrieb (58), das Positionsmessorgan (64) und das Kraftmessorgan (62) durch je ein dem Hauptschlitten (48), dem ersten Arm (52) und dem zweiten Arm (56) zugeordnetes Stellantriebsorgan (60), Positionsmesselement (68) beziehungsweise Kraftmesselement (66) gebildet ist, und die von der Kontaktrolle (36) über das Werkstück (20) auf die Stellantriebsorgane (60) ausgeübte Kraft (F) kontinuierlich mittels der Kraftmesselemente (66) erfasst wird.

6. Verfahren nach einem der Ansprüche 1 bis 5, **dadurch gekennzeichnet, dass** zwischen einem Arbeitspunkt (80) des Bandschleifgeräts (12) und einem Arbeitspunkt (82) des Werkstücks (20) eine Wirklinie (78) definiert wird und der Roboter (44) das Werkstück (20) entlang dieser Wirklinie (78) kraftgeregelt bewegt.

7. Verfahren nach einem der Ansprüche 1 bis 6, **dadurch gekennzeichnet, dass** das Handhabungsgerät (14), vorzugsweise ein Industrieroboter (22), mittels einer programmierbaren Gerätesteuerung (24) zum Bewegen des Bandschleifgeräts (12) entlang der Bewegungsbahn (28) gesteuert wird, der Stellantrieb (58) beziehungsweise der Roboter (44) mittels eines einen Regler bildenden, die Daten speichernden, programmierbaren Kontrollers (32) geregelt wird, und gegebenenfalls die Gerätesteuerung (24) an den Kontroller (32) die Zeitinformation bestimmende Synchronisationssignale abgibt, um die Daten synchron mit der Bewegung des Handhabungsgeräts (14) zu speichern beziehungsweise zur Regelung aus einem Speicher auszulesen.

8. Verfahren nach einem der Ansprüche 1 bis 7, **dadurch gekennzeichnet, dass** mittels der Daten für unterschiedliche Abschnitte der Bewegungsbahn (28) jeweils eine Regelstreckenidentifikationen durchgeführt wird und zum Schleifen der Werkstücke (20) der Regler des Kontrollers (32), beim Durchlaufen des jeweiligen Abschnitts, die diesem Abschnitt zugeordnete Regelstreckenidentifikation berücksichtig.

9. Verfahren nach einem der Ansprüche 1 bis 8, **dadurch gekennzeichnet, dass** eine auf die Kontaktrolle (36) rechtwinklig zu einer Andruckkraft (F), mit welcher das Werkstück (20) jeweils am Schleifband (34) anliegt, einwirkende Kraftkomponente (F') ermittelt wird.

10. Verfahren nach einem der Ansprüche 1 bis 9, **dadurch gekennzeichnet, dass** aus den beim Schleifen der Werkstücke (20) erfassten Daten des Kraftmessorgans (62) beziehungsweise Kraftmesselements (66) eine den Verschleiss des Schleifbandes (34) charakterisierende Verschleissinformation ermittelt wird und vorzugsweise die Antriebsgeschwindigkeit des Schleifbandes (34) und/oder gegebenenfalls die Andruckkraft (F) auf Basis der Verschleissinformation auf wenigstens annähernd konstanten Spanabtrag geregelt wird.

11. Verfahren nach einem der Ansprüche 1 bis 7, **dadurch gekennzeichnet, dass** aus den Daten des Kraftmessorgans (62) und/oder Positionsmessorgans (64) und/oder der Prozesszeit ein Frequenzspektrum zu den jeweiligen Berührungsabschnitten (BB) beziehungsweise Berührungs-Zeitabschnitten (BT) ermittelt wird.

12. Verfahren nach einem der Ansprüche 1 bis 7, **dadurch gekennzeichnet, dass** die Daten des Kraftmessorgans (62) und/oder Positionsmessorgans (64) und/oder der Prozesszeit zur Prozessoptimierung und / oder Prozessregelung verwendet werden.

13. Schleifvorrichtung (10) mit einem ein wenigstens um eine Kontaktrolle (36) und eine Antriebsrolle (38) herumgeführtes, in sich geschlossenes Schleifband (34) aufweisenden Bandschleifgerät (12), einem programmgesteuerten, einen das Bandschleifgerät (12) tragenden Endeffektor (26) aufweisenden Handhabungsgerät (14), welches zum Schleifen eines Werkstücks (20) das Bandschleifgerät (12) entlang einer vorbestimmten, programmierten Bewegungsbahn (28) bewegt, einer ein Halteorgan (18) zum Halten des Werkstücks (20) aufweisenden Haltevorrichtung (16), einem Kraftmessorgan (62) zum Messen der Kraft (F), mit welcher das Schleifband (34) auf das Werkstück (20) einwirkt, einem Stellantrieb (58) zum relativ zueinander Bewegen der Kontaktrolle (36) und des Halteorgans (18), sowie einem Positionsmessorgan (64) zum Erfassen der Position (P) des Stellantriebs (58), wobei das Kraftmessorgans (62) und des Positionsmessorgans (64) dazu bestimmt sind, nach erfolgter Programmierung der Bewegungsbahn (28), beim Schleifen eines Probe-Werkstück (20) - mit zurück drängbarem Stellantrieb (58) - kontinuierlich die Kraft (F) und die Position (P) des Stellantriebs (58) zu erfassen, wobei die entsprechenden Daten gespeichert und aus diesen Daten die Berührungs-Abschnitte (BB) der Bewegungsbahn (28), in welchen das Schleifband (34) am Probe-Werkstück (20) zum Schleifen anliegt, und die Berührungsfrei-Abschnitte (BFB) der Bewegungsbahn (28), in welchen das Schleifband (34) und das Werkstück (20) relativ zu einander berührungsfrei sind, ermittelt werden, und der Stellantrieb (58) dann beim Schleifen der Werkstücke (20) mittels der gespeicherten Daten in den Berührungs-Abschnitten (BB) kraftgeregelt und in den Berührungsfrei-Abschnitten (BFB) positionsgeregelt ist.
